# EUROPEAN PATENT SPECIFICATION

(11) **EP 3 909 914 B1**
(45) Date of publication and mention of the grant of the patent: **15.02.2023**
(21) Application number: 21000112.9
(22) Date of filing: 22.04.2021
(51) Int. Cl.: C01G 3/06, B01J 8/00, C01C 1/16, C02F 1/62, B01J 19/00

(54) **PROCESS AND PLANT FOR THE PRODUCTION OF COPPER OXYCHLORIDE**
VERFAHREN UND ANLAGE ZUR HERSTELLUNG VON KUPFEROXYCHLORID
PROCÉDÉ ET INSTALLATION POUR LA PRODUCTION D'OXYCHLORURE DE CUIVRE

(30) Priority: 11.05.2020 IT 202000010543
(43) Date of publication of application: 17.11.2021
(73) Proprietor: Agiltek S.r.l., 13045 Gattinara (VC) (IT)
(72) Inventor: Borasio, Filippo, I-13045 Gattinara (VC) (IT); Guiglia, Giancarlo, I-13045 Gattinara (VC) (IT)
(74) Representative: Garavelli, Paolo

(56) References cited:
- CN-A- 105 836 788
- CN-C- 100 395 186
- US-A- 5 451 414

## Description

The present invention refers to a process and a plant for the production of copper oxychloride, in particular starting from waste containing copper, coming in greater quantities from companies operating in the printed circuit sector.

Processes are known in the art for the production of copper oxychloride starting from metallic copper (filaments, coils, plates, etc.), on which an acid attack is carried out, to bring it into solution, and a subsequent precipitation to obtain copper oxychloride.

These known processes do not solve the problem of obtaining copper oxychloride starting from waste containing copper, for example waste from processing printed circuits.

US 5 451 414 A discloses a process for producing copper oxychloride comprising a step of forming copper oxychloride from an alkaline waste and an acidic waste. The waste streams used in D1 can be of the kind coming from the production of printed circuit boards.

Object of the present invention is solving the aforesaid prior art problems by providing a process and a plant for the production of copper oxychloride, starting from acid and alkaline waste solutions containing copper.

In particular, the wastes that can be used in the process are identified by the following EWC codes.

Alkaline solutions:
- CER code 11 01 07 (Pickling bases);
- Code CER 11 01 11 (Washing solutions containing dangerous substances).

Acid solutions:
- CER code 11 01 06 (Acids not otherwise specified);
- Code CER 11 01 05 (Pickling acids).

The aforementioned and other objects and advantages of the invention, which will emerge from the following description, are achieved with a process and a plant for the production of copper oxychloride such as those described in the independent claims. Preferred embodiments and nontrivial variations of the present invention form the subject of the dependent claims.

It is understood that all attached claims form an integral part of the present description.

It will be immediately obvious that innumerable variations and modifications (for example relating to shape, dimensions, arrangements and parts with equivalent functionality) can be made to what is described without departing from the scope of the invention as appears from the attached claims.

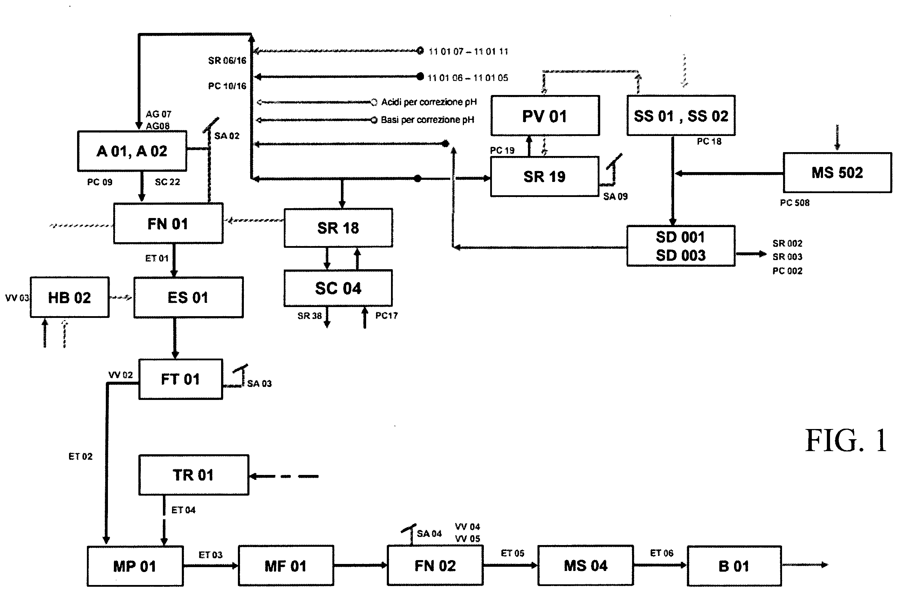

The present invention will be better described by some preferred embodiments, provided by way of non-limiting example, with reference to the attached drawings, in which Figure 1 shows a diagram of a plant for the production of copper oxychloride according to the present invention.

With reference to the Figure, the process for the production of copper oxychloride according to the present invention is described below, which uses waste solutions, coming for example from companies operating in the field of printed circuits.

Copper oxychloride is a molecule with the following chemical formula:

Copper oxychloride = Cu₂(OH)₃Cl

The waste that can be used in the process of the invention is identified by the following EWC codes:
Alkaline solutions:
   - CER code 11 01 07 (Pickling bases);
   - CER code 11 01 11 (Washing solutions containing dangerous substances).
Acid solutions:
   - CER code 11 01 06 (Acids not otherwise specified);
   - CER code 11 01 05 (Pickling acids).

The chemical species present in the waste that participate in the reaction for the production of copper oxychloride are the following:
CER 11 01 07 and CER 11 01 11

   [Cu(NH₃)₄]Cl₂ x 2H₂O

   NH₃
CER 11 01 06 and CER 11 01 05

   CuCl₂ x 2H₂O

   H + Cl-

The reaction stoichiometry for the production of copper oxychloride can be defined as follows:

*[Cu (NH₃)₄]Cl₂ x 2H₂O + CuCl₂ x 2H2O **+** NH3 **+** 2HCl Cu₂(OH)₃Cl **+** 5NH₄Cl **+** H₂O*

The product obtained with the process of the invention is Cu₂(OH)₃Cl copper oxychloride, CAS number 1332-65-6.

The process for the production of copper oxychloride according to the invention includes the following steps:
- a first step for the formation of copper oxychloride, in which reagents comprising a predefined quantity of alkaline waste such as CER 11 01 07 (Pickling bases) or CER 11 01 11 are introduced into a reactor A01, A02 (Washing solutions containing dangerous substances), and the simultaneous addition of a predefined quantity of alkaline waste of type CER 11 01 07 or CER 11 01 11 and acid waste of type CER 11 01 05 (Pickling acids) or CER 11 01 06 (Acids not otherwise specified), preferably by means of pumps and controlling the dosage of each reagent by means of a liter counter, to start the formation reaction of copper oxychloride; preferably, the mixture inside the reactor is kept under agitation, both during the introduction of the reagents and during the reaction itself, by means of agitators AG07, AG08. In particular, said first phase provides that, once 80% of the reactor is filled with the reagents, a time interval is waited, for example of about 20 minutes, to ensure complete homogenization and stabilization of the pH of the reaction; during this time interval, copper oxychloride with a very fine grain size, called "pappetta" in the sector, is added to the reactor and used as a crystallization germ to favor the formation of new crystals FN01 in a recovery step, following a second filtering step described below; once the pH of the reaction has stabilized, correction is carried out by adding either further waste or acids or bases, until the desired pH value (4.5 ÷ 7.5) is reached. The pH range indicated is wide since, working with waste rather than raw materials, the operating conditions are variable as they are largely affected by the chemical characteristics of the waste, which are usually verified and analyzed upon acceptance of the waste entering the plant. and are consequently very variable over time.
- a second step of filtering by means of the first filter means, for example a belt filter FN01, and washing with hot mains water heated to a temperature between 50-70 °C by means of first heating means of a known type, comprising for example a liquid-liquid heat exchanger SC04, of the product of the first phase of the process, in order to separate the copper oxychloride (solid) retained by the first filter media FN01, from the mother liquors containing ammonium chloride and from the finer oxychloride particles. In particular, the washing phase is essential for containing the quantity of soluble chlorides on the finished product within a maximum limit of 20 g/kg (chlorides are present in the treated waste and formed during the reaction (ammonium chloride)). Filtration is improved by applying a vacuum system to the belt, which speeds up the filtering process and lowers the percentage of moisture in the oxychloride retained by the filter media. Preferably the transfer of the reaction product from the reactor A01, A02 to the filtering media is carried out by means of pumping means, for example a PC09 centrifugal pump.

Preferably, the process of the invention comprises the step of recovering oxychloride in the form of baby food from the mother liquors discharged from the FN01 belt filter, which takes place in liquid-solid decanters SD001, SD003.

At first there is a separation, in the mother liquors, between the liquid phase and the air sucked in the belt filter FN01, carried out with a vacuum pump and liquid-gas separators SS01 and SS02.

The liquid phase is then sent to the liquid-solid decanters SD001, SD003; during this passage, in which the speed of crossing of the decanter by the liquid phase is very low, all the suspended solids in the sedimenter cone settle. This very fine-grained copper oxychloride, called "pappetta" in the sector, is recovered cyclically in the liquid-solid decanters SD001, SD003 and, as previously mentioned, is used as a crystallization germ, introduced into reactors A01 and A02 to favor the reaction of formation of new copper oxychloride crystals.
- a third drying step of the copper oxychloride by means of drying means, for example an ES01 dryer or an oven, which exploit a stream of hot air, created for example by means of fans VV03, VV02, coming from second heating means, comprising for for example a methane burner HB02, to pulverize it, dry it and transport it to second filter media, for example a first FT01 bag filter. To ensure the efficiency of the drying process, an adequate temperature and air flow must be set; in particular, the oven/dryer has a temperature of about 120 °C and the air flow rate is of the order of 8000 ± 500 Nm₃/h, necessary to guarantee an air speed between 14.5 and 16.5 m/s. Preferably, the copper oxychloride retained by the first filter media is collected in a hopper with a bridge breaker, and dosed and sent to the ES01 dryer by means of handling, for example an ET01 screw that exploits the thixotropy of the product.
- a fourth step of filtering the copper oxychloride by means of the second filter media, for example the first bag filter FT01, in order to separate the oxychloride dust retained by the second filter media from the air used as a vehicle for transporting the oxychloride from the drying media to the second FT01 filter media. Preferably, the first filter is a high pressure bag filter, comprising a battery of 240 bags with a filtering surface of 462 m², configured to ensure an air speed leaving the filter of less than 0.5 m/min.
- a fifth step of adding predetermined additives to the oxychloride powder filtered by the second filter media and of homogenizing the oxychloride powder and additives by first MP01 homogenizing media, for example a paddle mixer having a capacity of about 1300 kg including a hopper loading, said mixer receiving the powders from starting/handling means, receiving the copper oxychloride powders filtered by the second filter media FT01, for example through a rotary valve by means of an ET02 screw conveyor, to move a predefined quantity of powder.

In order to determine the quantity and type of additives to be added in the first phase of the formation of copper oxychloride, a sample of oxychloride filtered by the second filter media FT01 is taken to carry out product characterization analyzes. The analyzes carried out on said sample concern the total amount of copper in the sample, the pH of the sample dispersed in water, the content of soluble chlorides. In particular, it is possible to add wetting additives, suspending agents, dyes, aggregates, depending on the type of final product to be obtained. Preferably the homogenization of the oxychloride powder and additives is carried out by leaving the mixer blades moving for 15 minutes.
- a sixth step of grinding/micronization of oxychloride powder and additives by means of micronization, for example an MF01 mill which receives the powders from handling means, for example an ET03 screw; preferably the MF01 mill comprises a selector configured to select the residence time of the powder and the distance between the blades and the shell of the MF01 mill, which determines the granulometry of the finished product. Grinding affects, not exclusively but in a marked way, two parameters: dispersivity, that is, the ability of the oxychloride to disperse in water over a predetermined period of time; the suspensiveness, expressed as a percentage, which indicates the quantity of oxychloride that remains in suspension and does not deposit in a time of 30 minutes. The nominal capacity of the product ground by the MF01 mill is 450 kg of powder per hour.
- a seventh step for filtering the micronized product by means of third filtering means, for example a second bag filter FN02; preferably said third filtering means receive the micronized product for the thrust imparted by the mill MF01 and by suction fans VV04, VV05.
- an eighth step of homogenizing the product filtered by the third filtering means FN02, by means of second homogenizing means, for example a mixer MS04 which receives the powders that have flowed into a discharge hopper of the third filtering means FN02 and subsequently sent to said mixer MS04 by means of starting/handling means, for example an ET05 screw through a star valve and starting the product from the mixer MS04 to packaging on a scale B01, by means of handling means, for example an ET06 screw.

A preferred embodiment of the plant for the production of copper oxychloride according to the invention comprises:
- the reactors A01, A02 in which the reagents are loaded and the oxychloride formation reaction takes place, including the agitators AG07, AG08 configured to keep the mixture inside the reactors always stirring, and a centrifugal pump PC09 to send the product of the reaction to the belt filter FN01; for example said reactors are made of fiberglass, said stirrers are made of titanium and said centrifugal pump of antacid plastic material. For example, for a 3m3 reactor, the centrifugal pump is 10/15 m3/h;
- the FN01 belt filter which uses hot water, preferably loaded into an SR18 storage tank, for example an insulated cylindrical tank of 5 m3 in carbon steel, to filter the material coming from the reactor A01, A02;
- a liquid-liquid heat exchanger SC04, for example a plate exchanger that uses the coolant of an AC methane gas cogenerator to heat the water for the FN01 belt filter, and includes a PC17 pump for the recirculation of water inside the SR18 tank;
- a cold water storage tank with SR38 autoclave function, for example a 5 m3 cylindrical steel tank, configured to serve the water system of the plant;
- the ES01 dryer including a scraper and configured to dry the washed oxychloride, filtered by the FN01 filter, collected in the hopper and moved by the ET01 screw towards the ES01 dryer; for example, said dryer is of the turboflash forceddrag type, with 500 kg/h of evaporated water, in 316 stainless steel;
- the HB02 burner, for example of the in-air type that uses methane as a fuel, configured to serve the ES01 dryer and including a VV03 fan, for example of the pressing type; for example for a 600000 kcal/h burner, the fan is 15000 m³/h;
- the first FT01 bag filter configured to receive and filter the dried oxychloride in the ES01 dryer, said FT01 bag filter comprising the discharge hopper for collecting the filtered oxychloride powder, said hopper comprising the rotary valve and the ET02 discharge configured to start the powders from the hopper to the mixer; said first FT01 bag filter also includes the VV02 fan configured to suck in the dedusted air; for example, the first FT01 bag filter includes a filtering surface of 462 m2 and the VV02 fan of 15,000 m³/h;
- the MP01 mixer configured to receive the filtered oxychloride powder and mix it with any additives;
- the MF01 mill, comprising a screening selector, a loading hopper and an ET03 auger configured to start the oxychloride from the hopper to the MF01 mill, said mill being configured to micronize the oxychloride; for example, the MF01 mill is 450 kg/h;
- the second bag filter FN02, configured to filter the micronized oxychloride from the MF01 mill, said second bag filter comprising the discharge hopper for collecting the filtered oxychloride powder, said discharge hopper comprising the rotary valve configured to start the powders from the hopper to the mixer MS04; said second bag filter also includes VV04, VV05 fans configured to suck in the dedusted air, part of which is sent to the MF01 mill and part of which is released into the atmosphere through the SA04 chimney; for example, the second FT02 bag filter includes a filtering surface of 462 m² and 6000 m³/h fans VV04, VV05;
- the MS04 mixer configured to receive the micronized product and homogenize it, comprising an ET05 loading screw configured to start the oxychloride from the second filter FN02 to the MS04 mixer, and an ET06 unloading screw configured to start the oxychloride from the MS04 mixer to the packaging on scale B01;
- the B01 scale, for example flat, configured to receive the product from the ET06 screw of the MS04 mixer and weigh it for bagging/packaging;
- the liquid-gas separators SS01, SS02, configured to serve the belt filter FN01, including a centrifugal pump PC18 for the discharge; for example said separators are cylindrical of 1 m³ in reinforced fiberglass, and said pump is in antacid plastic material of 5.0 m³/h;
- the vacuum pump PV01, for example with liquid ring, configured to serve the belt filter FN01; for example, said pump is 1200 m₃/h and creates a vacuum of 600 mm of Hg;
- a water storage tank SR19 for the cooling circuit of the vacuum pump PV01, said tank being fed with mains water and comprising a centrifugal pump PC19; for example, said tank is 4m3 cylindrical in polyethylene;
- an optional MS502 tank equipped with a stirrer containing a 5% sodium bicarbonate solution used for the pH correction of mother liquors and washing waters deriving from the production of copper oxychloride the pH during this phase is brought to 7 ± 0.2 to favor the precipitation of the copper left in the solution in the form of pap, and to make the water destined for the purification plant more homogeneous. The pH is checked by means of a pH-meter in the first SD001 settler and the bicarbonate solution is dosed by a PC508 pump in the SD001 settler.
- a known type SC22 scrubber comprising a fan, for example a centrifugal suction fan; for example said scrubber is made of PVC with a diameter of 0.70 m, and said fan is of 2000 m3/h made of plastic material.

In the operation of the plant for the production of copper oxychloride according to the invention, the solutions and the related reagents are sent to reactors A01 and A02 where the formation reaction of Copper Oxychloride takes place.

The product formed in the reactors A01 and A02 is sent by the centrifugal pump PC09 to the belt filter FN01 where it is filtered and washed with hot water. The washing phase is fundamental for controlling the quantity of chlorides on the finished product, chlorides due to the presence in the treated waste and the formation of ammonium chloride during the reaction itself.

The filtered copper oxychloride is placed in the loading hopper, the ET01 screw sends it to the ES01 dryer inside which, thanks to the hot air coming from the HB02 methane burner, it is dried.

The VV03 and VV02 fans dry and at the same time transport the dried copper oxychloride into the first FT01 bag filter. At this point, the oxychloride collects in the unloading hopper, where through the rotary valve and the ET02 screw it is first pushed into the mixer, where the additives for the formulation of the desired product are added, and then through the ET03 screw into the MF01 mill for micronization.

The ground and screened copper oxychloride, thanks to the thrust given by the MF01 mill and the VV04 and VV05 suction fans, reaches the second bag filter FN02 and collects in the discharge hopper.

Thanks to the rotary valve and the ET05 unloading screw, the powder reaches the MS04 mixer where the product is further homogenized and then, through the ET06 screw, the containers (big-bags) on the B01 scale are filled.

The process of the invention allows a further meticulous recovery of oxychloride in the form of baby food from the mother liquors discharged from the belt filter. First there is a separation between the liquid phase and the sucked air in the belt filter FN01 with vacuum pump in the liquid-gas separators SS01 and SS02. The liquid phase is sent to the liquid-solid decanters SD001, SD003. During this passage, in which the speed of crossing of the sedimenter by the liquid phase is very low, all the suspended solids in the sedimenter cone settle. This copper oxychloride, called babyfood or "pappetta", of very fine grain size is recovered cyclically by the decanters. It is used as a crystallization germ, introduced into reactors A01 and A02 to favor the formation reaction of the new copper oxychloride crystals.

The liquid phase is finally sent to the water purification plant.

Optionally, the process according to the invention provides for the use of a 5% sodium bicarbonate solution, contained in the tank MS 502 equipped with a stirrer, for the correction of the pH of the mother liquors and of the washing waters deriving from the production of Copper oxychloride. The pH during this phase is brought to 7 ± 0.2 in order to favor the precipitation of the copper remaining in the solution in the form of pappetta.

Another advantage of this treatment consists in the possibility of making the water destined for the purification plant more homogeneous.

The pH is checked by means of a pH-meter in the first SD001 settler and the bicarbonate solution is dosed by the PC508 pump in the SD001 settler.

Advantageously, the process and the plant according to the present invention allow to obtain copper oxychloride starting from waste solutions, coming for example from companies operating in the printed circuit board sector, allowing to use waste having chemical characteristics that are very variable in the time, depending on the type of waste used.

## Claims

1. Process for the production of copper oxychloride comprising the following steps:
- a first step for forming copper oxychloride, in which a predefined quantity of alkaline waste of a CER 11 01 07 or CER 11 01 11 type is introduced into a reactor (A01, A02) and simultaneously adding a predefined quantity of alkaline waste of a CER 11 01 07 or CER 11 01 11 type and acid waste of a CER 11 01 05 or CER 11 01 06 type to start the formation reaction of copper oxychloride, keeping the mixture inside the reactor (A01, A02) in agitation; once the pH of the reaction has stabilized, the correction is carried out by adding either further waste or acids or bases, until the desired pH value between 4.5 ÷ 7.5 is reached;
- a second step of filtering by first filter media (FN01) and washing with water heated by first heating media (SC04) of the product of the first stage of the process, in order to separate the copper oxychloride retained by the first filter media (FN01) from the water mothers containing ammonium chloride and from the finest oxychloride particles;
- a third drying step of copper oxychloride by means of drying means (ES01) to pulverize it, dry it and transport it to second filtering means (FT01);
- a fourth step of filtering the copper oxychloride by means of the second filter media (FT01) in order to separate the oxychloride powder retained by the second filter media (FT01) from the air used as a vehicle for the transport of the oxychloride from the media drying (ES01) on the second filter media (FT01);
- a fifth step of adding predetermined additives to the oxychloride powder filtered by the second filter media and of homogenizing the oxychloride powder and additives by first homogenizing media (MP01);
- a sixth step of grinding/micronizing oxychloride powder and additives by means of micronization (MF01);
- a seventh filtering step of the micronized product by means of third filtering means (FN02);
- an eighth homogenization step of the product filtered by the third filtering means (FN02), by means of second homogenization means (MS04),
**characterized in that** in the fifth step the first homogenization means (MP01) receive the copper oxychloride powders filtered by the second filter media (FT01) by means of starting/handling means (ET02) configured to move a predefined quantity of powder, and **characterized in that** a sample of oxychloride filtered by the second filter media (FT01) is taken to carry out product characterization analyzes, in order to determine the quantity and type of additives to be added in the first phase of copper oxychloride formation.

2. Process for the production of copper oxychloride according to claim 1, **characterized in that** it comprises a step for recovering fine-grained oxychloride from the mother liquors discharged from the first filter media (FN01) into liquid-solid decanters (SD001, SD003) in which the separation between the liquid phase and the air sucked in the first filter media (FN01) takes place, called copper oxychloride of very fine grain size being then introduced into the reactors (A01, A02) to use it as a crystallization germ and favor the formation reaction of new copper oxychloride crystals.

3. Process for the production of copper oxychloride according to claim 2, **characterized in that** the first phase provides that, once 80% of the reactor is filled with the reagents, a time interval is waited to ensure complete homogenization and stabilization of the pH of the reaction, during which the fine-grained copper oxychloride is added to the reactor and used as a crystallization germ to favor the formation of new crystals.

4. Process for the production of copper oxychloride according to any one of the preceding claims, **characterized in that** in the second filtering step the first filter media comprise a belt filter (FN01), and the hot washing water is heated to a temperature comprised between 50-70 °C by means of the first heating means of a known type comprising a liquid-liquid heat exchanger (SC04).

5. Process for the production of copper oxychloride according to any one of the preceding claims, **characterized in that** in the third step the drying means comprise a dryer (ES01) or an oven, which exploit a stream of hot air created by means of fans (VV03, VV02) coming from the second heating means comprising a methane burner (HB02), and the second filtering means comprise a first bag filter (FT01).

6. Process for the production of copper oxychloride according to any one of the preceding claims, **characterized in that** in the seventh step the third filtering means comprise a second bag filter (FN02) which receives the micronized product for the thrust exerted by the mill (MF01) and by suction fans (VV04, VV05).

7. Process for the production of copper oxychloride according to any one of the preceding claims, **characterized in that** in the eighth step the second homogenization means comprise a mixer (MS04) which receives the powders that have flowed into a discharge hopper of the third filtering means (FN02) and subsequently sent to said mixer (MS04) by starting/handling means comprising an auger (ET05).

8. Plant for the production of copper oxychloride with a process according to any one of the preceding claims, **characterized in that** it comprises:
- at least one reactor (A01, A02) into which the reagents are loaded and the oxychloride formation reaction takes place, including the stirrers (AG07, AG08) configured to keep the mixture inside the reactors under stirring;
- the belt filter (FN01) which uses hot water to filter the material coming from the reactor (A01, A02);
- a liquid-liquid heat exchanger (SC04) to heat the water serving the belt filter (FN01);
- a cold water storage tank (SR38) configured to serve the plant's water system;
- the dryer (ES01) configured to dry the washed oxychloride, filtered by the filter (FN01);
- the first bag filter (FT01) configured to receive and filter the dried oxychloride in the dryer (ES01);
- the mixer (MP01) configured to receive the filtered oxychloride powder and mix it with any additives;
- the mill (MF01) configured to micronize the oxychloride;
- the second bag filter (FN02) configured to filter the micronized oxychloride from the mill (MF01);
- the mixer (MS04) configured to receive the micronized product and homogenize it;
- the liquid-gas separators (SS01, SS02) configured to serve the belt filter (FN01) in the recovery of fine-grained oxychloride from the mother liquors discharged from the belt filter (FN01).

## Patentansprüche

1. Verfahren zur Herstellung von Kupferoxychlorid umfassend die folgenden Schritte:
- eine erste Phase der Bildung von Kupferoxychlorid, in der eine vordefinierte Menge an alkalischem Abfall des Typs CER 11 01 07 oder CER 11 01 11 in einen Reaktor (A01, A02) eingebracht wird und die gleichzeitige Zugabe einer vordefinierten Menge Säure Abfall vom Typ CER 11 01 05 oder CER 11 01 06, um die Reaktion zur Bildung von Kupferoxychlorid zu starten, wobei die Mischung im Inneren des Reaktors (A01, A02) unter Rühren gehalten wird; sobald sich der pH-Wert der Reaktion stabilisiert hat, wird eine Korrektur durchgeführt, indem entweder weiterer Abfall oder Säuren oder Basen zugegeben werden, bis der gewünschte pH-Wert zwischen 4,5 ÷ 7,5 erreicht ist;
- eine zweite Filterstufe durch erste Filtermedien (FN01) und Waschen mit Wasser, das durch erste Heizmedien (SC04) erhitzt wurde, des Produkts der ersten Stufe des Verfahrens, um das von den ersten Filtermedien zurückgehaltene Kupferoxychlorid abzutrennen (FN01) aus den ammoniumchloridhaltigen Wassermüttern und aus feinsten Oxychloridpartikeln;
- eine dritte Trocknungsphase des Kupferoxychlorids mittels Trocknungsmitteln (ES01), um es zu pulverisieren, zu trocknen und zu zweiten Filtermitteln (FT01) zu transportieren;
- eine vierte Filtrationsstufe des Kupferoxychlorids mittels des zweiten Filtermediums (FT01), um das durch das zweite Filtermedium (FT01) zurückgehaltene Oxychloridpulver von der Luft abzutrennen, die als Vehikel für den Transport des Oxychlorids verwendet wird die Medientrocknung (ES01) auf dem zweiten Filtermedium (FT01);
- einen fünften Schritt des Hinzufügens vorbestimmter Zusatzstoffe zu dem durch die zweiten Filtermedien gefilterten Oxychloridpulver und des Homogenisierens des Oxychloridpulvers und der Zusatzstoffe durch erste Homogenisierungsmedien (MP01);
- ein sechster Schritt des Mahlens/Mikronisierens von Oxychloridpulver und Additiven mittels Mikronisierung (MF01);
- einen siebten Filterschritt des mikronisierten Produkts mittels dritter Filtermittel (FN02);
- einen achten Homogenisierungsschritt des durch die dritten Filtermittel (FN02) gefilterten Produkts durch zweite Homogenisierungsmittel (MS04);
**gekennzeichnet durch** die Tatsache, dass in der fünften Phase die ersten Homogenisierungsmittel (MP01) die durch die zweiten Filtermedien (FT01) gefilterten Kupferoxychloridpulver mittels Start-/Handhabungsmittel (ET02) empfangen, die konfiguriert sind, um eine vordefinierte Pulvermenge zu bewegen, und **dadurch gekennzeichnet, dass** eine durch das zweite Filtermedium (FT01) filtrierte Oxychloridprobe entnommen wird, um Produktcharakterisierungsanalysen durchzuführen, um die Menge und Art der in der ersten Phase der Kupferoxychloridbildung hinzuzufügenden Additive zu bestimmen.

2. Verfahren zur Herstellung von Kupferoxychlorid nach Anspruch 1, **dadurch gekennzeichnet, dass** es einen Schritt zur Rückgewinnung von feinkörnigem Oxychlorid aus den von den ersten Filtermedien (FN01) ausgetragenen Mutterlaugen in Flüssig-Fest-Dekanter (SD001, SD003) umfasst. in dem die Trennung zwischen der flüssigen Phase und der angesaugten Luft im ersten Filtermedium (FN01) erfolgt, wobei dann in die Reaktoren (A01, A02) sogenanntes Kupferoxychlorid in sehr feiner Körnung eingebracht wird, um es als Kristallisationskeim zu nutzen und begünstigen die Bildungsreaktion neuer Kupferoxy chloridkristalle.

3. Verfahren zur Herstellung von Kupferoxychlorid nach Anspruch 2, **dadurch gekennzeichnet, dass** die erste Phase vorsieht, dass, sobald 80 % des Reaktors mit den Reagenzien gefüllt sind, ein Zeitintervall abgewartet wird, um die vollständige Homogenisierung und Stabilisierung sicherzustellen pH-Wert der Reaktion, bei der das feinkörnige Kupferoxychlorid in den Reaktor gegeben und als Kristallisationskeim zur Begünstigung der Kristallneubildung verwendet wird.

4. Verfahren zur Herstellung von Kupferoxychlorid nach einem der vorhergehenden Ansprüche, **dadurch gekennzeichnet, dass** im zweiten Filterschritt die ersten Filtermedien einen Bandfilter (FN01) umfassen und das heiße Waschwasser auf eine dazwischen liegende Temperatur erhitzt wird 50-70°C mittels der ersten Heizeinrichtung des bekannten Typs, die einen Flüssig-Flüssig-Wärmetauscher (SC04) umfasst.

5. Verfahren zur Herstellung von Kupferoxychlorid nach einem der vorhergehenden Ansprüche, **dadurch gekennzeichnet, dass** die Trocknungsmittel in der dritten Phase einen Trockner (ES01) oder einen Ofen umfassen, die einen mittels Ventilatoren erzeugten Heißluftstrom nutzen (VV03, VV02), die von den zweiten Heizmitteln kommen, die einen Methanbrenner (HB02) umfassen, und die zweiten Filtermittel einen ersten Beutelfilter (FT01) umfassen.

6. Verfahren zur Herstellung von Kupferoxychlorid nach einem der vorhergehenden Ansprüche, **dadurch gekennzeichnet, dass** im siebten Schritt die dritten Filtermittel einen zweiten Beutelfilter (FN02) umfassen, der das mikronisierte Produkt für den von der Mühle ausgeübten Schub aufnimmt ( MF01) und durch Saugventilatoren (VV04, VV05).

7. Verfahren zur Herstellung von Kupferoxychlorid nach einem der vorhergehenden Ansprüche, **dadurch gekennzeichnet, dass** in der achten Phase die zweiten Homogenisierungsmittel einen Mischer (MS04) umfassen, der die Pulver aufnimmt, die in einen Auslauftrichter der dritten Filterung geflossen sind Mittel (FN02) und anschließend zu dem Mischer (MS04) durch Start-/Handhabungsmittel geleitet, die eine Schnecke (ET05) umfassen.

8. Anlage zur Herstellung von Kupferoxychlorid mit einem Verfahren nach einem der vorhergehenden Ansprüche, **dadurch gekennzeichnet, dass** sie umfasst:
- mindestens einen Reaktor (A01, A02), in den die Reagenzien geladen werden und in dem die Oxychloridbildungsreaktion stattfindet, einschließlich der Rührer (AG07, AG08), die so konfiguriert sind, dass sie die Mischung in den Reaktoren unter Rühren halten;
- der Bandfilter (FN01), der heißes Wasser verwendet, um das aus dem Reaktor (A01, A02) kommende Material zu filtern;
- einen Flüssig-Flüssig-Wärmetauscher (SC04) zum Erhitzen des dem Bandfilter (FN01) dienenden Wassers;
- einen Kaltwasserspeicher (SR38), der so konfiguriert ist, dass er das Wassersystem der Anlage versorgt;
- den Trockner (ES01), der zum Trocknen des gewaschenen Oxychlorids konfiguriert ist, das durch den Filter (FN01) gefiltert wurde;
- den ersten Beutelfilter (FT01), der so konfiguriert ist, dass er das getrocknete Oxychlorid im Trockner (ES01) aufnimmt und filtert;
- der Mischer (MP01), der so konfiguriert ist, dass er das gefilterte Oxychloridpulver aufnimmt und es mit etwaigen Zusatzstoffen mischt;
- die Mühle (MF01), die zum Mikronisieren des Oxychlorids konfiguriert ist,
- den zweiten Beutelfilter (FN02), der konfiguriert ist, um das mikronisierte Oxychlorid aus der Mühle (MF01) zu filtern;
- den Mischer (MS04), der so konfiguriert ist, dass er das mikronisierte Produkt aufnimmt und es homogenisiert;
- Flüssigkeits-Gas-Separatoren (SS01, SS02), die so konfiguriert sind, dass sie dem Bandfilter (FN01) bei der Rückgewinnung von feinkörnigem Oxychlorid aus Mutterlaugen dienen, die von dem Bandfilter (FN01) abgelassen werden.

## Revendications

1. Procédé de fabrication d'oxychlorure de cuivre comprenant les étapes suivantes :
- une première phase de formation d'oxychlorure de cuivre, dans laquelle une quantité prédéfinie de déchets alcalins de type CER 11 01 07 ou CER 11 01 11 est introduite dans un réacteur (A01, A02) et addition simultanée d'une quantité prédéfinie d'acide déchets de type CER 11 01 05 ou CER 11 01 06 pour déclencher la réaction de formation d'oxychlorure de cuivre, en maintenant le mélange à l'intérieur du réacteur (A01, A02) sous agitation; une fois le pH de la réaction stabilisé, la correction est effectuée en ajoutant soit des déchets supplémentaires, soit des acides ou des bases, jusqu'à ce que la valeur de pH souhaitée entre 4,5 ÷ 7,5 soit atteinte;
- une deuxième étape de filtration par un premier média filtrant (FN01) et de lavage à l'eau chauffée par un premier média chauffant (SC04) du produit de la première étape du procédé, afin de séparer l'oxychlorure de cuivre retenu par le premier média filtrant ( FN01) des eaux mères contenant du chlorure d'ammonium et des particules les plus fines d'oxychlorure;
- une troisième phase de séchage de l'oxychlorure de cuivre au moyen de moyens de séchage (ES01) pour le pulvériser, le sécher et le transporter vers des seconds moyens de filtrage (FT01);
- une quatrième étape de filtration de l'oxychlorure de cuivre au moyen du second média filtrant (FT01) afin de séparer la poudre d'oxychlorure retenue par le second média filtrant (FT01) de l'air servant de véhicule au transport de l'oxychlorure depuis le séchage du média (ES01) sur le second média filtrant (FT01);
- une cinquième étape d'ajout d'additifs prédéterminés à la poudre d'oxychlorure filtrée par le second média filtrant et d'homogénéisation de la poudre d'oxychlorure et des additifs par le premier média homogénéisateur (MP01);
- une sixième étape de broyage/micronisation de la poudre d'oxychlorure et des additifs par micronisation (MF01);
- une septième étape de filtrage du produit micronisé au moyen de troisièmes moyens de filtrage (FN02);
- une huitième étape d'homogénéisation du produit filtré par les troisièmes moyens de filtrage (FN02), au moyen de deuxièmes moyens d'homogénéisation (MS04);
**caractérisé par le fait que** dans la cinquième phase les premiers moyens d'homogénéisation (MP01) reçoivent les poudres d'oxychlorure de cuivre filtrées par le deuxième média filtrant (FT01) au moyen de moyens de démarrage/manipulation (ET02) configurés pour déplacer une quantité prédéfinie de poudre, et **caractérisé par le fait qu'**un échantillon d'oxychlorure filtré par le deuxième média filtrant (FT01) est prélevé pour effectuer des analyses de caractérisation du produit, afin de déterminer la quantité et le type d'additifs à ajouter dans la première phase de formation d'oxychlorure de cuivre.

2. Procédé de production d'oxychlorure de cuivre selon la revendication 1, **caractérisé en ce qu'**il comprend une étape de récupération d'oxychlorure à grains fins à partir des eaux mères évacuées du premier média filtrant (FN01) dans des décanteurs liquide-solide (SD001, SD003) dans lequel s'effectue la séparation entre la phase liquide et l'air aspiré dans le premier média filtrant (FN01), appelé oxychlorure de cuivre de granulométrie très fine étant ensuite introduit dans les réacteurs (A01, A02) pour l'utiliser comme germe de cristallisation et favoriser la réaction de formation de nouveaux cristaux d'oxychlorure de cuivre.

3. Procédé de production d'oxychlorure de cuivre selon la revendication 2, **caractérisé en ce que** la première phase prévoit qu'une fois rempli à 80% le réacteur avec les réactifs, on attend un intervalle de temps pour assurer l'homogénéisation complète et la stabilisation du pH de la réaction, au cours de laquelle l'oxychlorure de cuivre à grains fins est ajouté au réacteur et utilisé comme germe de cristallisation pour favoriser la formation de nouveaux cristaux.

4. Procédé de production d'oxychlorure de cuivre selon l'une quelconque des revendications précédentes, **caractérisé en ce que** dans la seconde étape de filtration le premier média filtrant comprend un filtre à bande (FN01), et l'eau chaude de lavage est portée à une température comprise entre 50-70°C au moyen des premiers moyens de chauffage de type connu comprenant un échangeur de chaleur liquide-liquide (SC04).

5. Procédé de production d'oxychlorure de cuivre selon l'une quelconque des revendications précédentes, **caractérisé en ce que** dans la troisième phase les moyens de séchage comprennent un sécheur (ES01) ou un four, qui exploitent un courant d'air chaud créé au moyen de ventilateurs (VV03, VV02) provenant des deuxièmes moyens de chauffage comprenant un brûleur à méthane (HB02), et les deuxièmes moyens de filtration comprennent un premier filtre à manches (FT01).

6. Procédé de fabrication d'oxychlorure de cuivre selon l'une quelconque des revendications précédentes, **caractérisé en ce qu'**à la septième étape les troisièmes moyens de filtration comprennent un deuxième filtre à manche (FN02) qui reçoit le produit micronisé pour la poussée exercée par le broyeur ( MF01) et par des ventilateurs aspirants (VV04, VV05).

7. Procédé de production d'oxychlorure de cuivre selon l'une quelconque des revendications précédentes, **caractérisé en ce que** dans la huitième phase les deuxièmes moyens d'homogénéisation comprennent un mélangeur (MS04) qui reçoit les poudres qui se sont écoulées dans une trémie d'évacuation du troisième filtrage des moyens (FN02) et envoyé ensuite audit mélangeur (MS04) par des moyens de démarrage/manutention comprenant une vis sans fin (ET05).

8. Installation de production d'oxychlorure de cuivre avec un procédé selon l'une quelconque des revendications précédentes, **caractérisée en ce qu'**elle comprend:
- au moins un réacteur (A01, A02) dans lequel les réactifs sont chargés et la réaction de formation d'oxychlorure a lieu, incluant les agitateurs (AG07, AG08) configurés pour maintenir le mélange à l'intérieur des réacteurs sous agitation;
- le filtre à bande (FN01) qui utilise de l'eau chaude pour filtrer la matière provenant du réacteur (A01, A02);
- un échangeur de chaleur liquide-liquide (SC04) pour chauffer l'eau alimentant le filtre à bande (FN01);
- un réservoir de stockage d'eau froide (SR38) configuré pour desservir le réseau d'eau de l'usine;
- le sécheur (ES01) configuré pour sécher l'oxychlorure lavé, filtré par le filtre (FN01);
- le premier filtre à manche (FT01) configuré pour recevoir et filtrer l'oxychlorure séché dans le sécheur (ES01);
- le mélangeur (MP01) configuré pour recevoir la poudre d'oxychlorure filtrée et la mélanger avec d'éventuels additifs;
- le broyeur (MF01) configuré pour microniser l'oxychlorure;
- le second filtre à manches (FN02) configuré pour filtrer l'oxychlorure micronisé du broyeur (MF01);
- le mélangeur (MS04) configuré pour recevoir le produit micronisé et l'homogénéiser;
- des séparateurs liquide-gaz (SS01, SS02) configurés pour servir le filtre à bande (FN01) dans la récupération de l'oxychlorure à grains fins des liqueurs mères déchargées du filtre à bande (FN01).
